# EUROPEAN PATENT APPLICATION

(11) **EP 3 107 164 A1**
(43) Date of publication of application: **21.12.2016**
(21) Application number: 16001334.8
(22) Date of filing: 13.06.2016
(51) Int. Cl.: H02G 3/04

(54) **FLEXIBLE TUBE PARTICULARLY FOR CABLE PROTECTION**

(30) Priority: 15.06.2015 IT UB20151392
(71) Applicant: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(57) **Abstract**

A flexible tube, particularly for cable protection, comprising a corrugated inner core covered by an outer sheath; the core and the sheath are made of materials having the same polymeric base. The two materials have extrusion temperatures that are different but do not exceed 20°C, thus preventing overheating in the extrusion step.

## Description

The present invention relates to a flexible tube particularly for cable protection.

Flexible corrugated tubes are known which are used to protect, gather and channel electric wires for laying the wires under the floor, in the ceiling and in the walls.

Corrugated tubes are lightweight and easy to bend, but at the same time they are resistant to compression and impacts, as resistant as heavier rigid tubes, allowing safe and low-cost installation.

Traditional corrugated tubes are made of an insulating material, generally PVC, PP, PE, in various diameters and with different colors in order to allow an easy identification of the circuits inside them.

Corrugated tubes of the conventional type are extruded so as to provide a corrugated profile that is constituted by rings that repeat longitudinally and regularly along the tube. Those tubes must have certain mechanical characteristics and the requirements of protective tubes are contained in specific standards.

Corrugated tubes of the conventional type have an important problem when they are installed in a floor that is provided by using self-levelling liquid concrete.

Normally, for these applications there is a tendency to use a tube made of PVC. However, this material has a drawback: during extrusion, micro-perforations tend to form on the outer wall of the tube due to microscopic impurities and to the extrusion system.

When using a coextruded PVC tube there might be a transfer of the liquid concrete into the tube, which makes it very difficult or impossible to then insert the electrical cables in the tube itself.

In order to solve this problem, some manufacturers have produced tubes constituted by two different materials: an internal core made of rigid PVC, which ensures adequate structural strength, and an external cladding, i.e., a protective film that is adapted to keep the annular surface intact, without micro-perforations. The film must be able to withstand impacts, treading and other types of stress, especially at low temperatures.

Manufacturers currently use two completely different materials to provide the composite tube, for example PVC for the internal core and polypropylene for the film, so as to prevent the materials from melting into each other during extrusion.

However, since the materials have extrusion temperatures with a difference of over 50°C, overheating occurs on the PVC structure, making it more fragile. The extrusion temperature of PVC is 180°C, while the extrusion temperature of PP is 230°C.

Another drawback of the composite tubes of the prior art is observed when they undergo a thermal expansion; the two components of the tube, the core and the film, in fact tend to separate, because the two different materials have different linear expansion coefficients.

The aim of the present invention is to provide a flexible tube of the composite type that overcomes the drawbacks of the cited prior art.

Within the scope of this aim, an object of the invention is to provide a tube which, when subjected to thermal expansion, prevents linear displacements between the two components.

Another object of the invention is to provide a flexible tube which, by virtue of its particular constructive characteristics, is capable of giving the greatest assurances of reliability and safety use.

This aim, these objects and others that will become better apparent hereinafter are achieved by a flexible tube, particularly for cable protection, comprising an inner core covered by an outer sheath; said tube being characterized in that said core and said sheath are made of materials having the same polymeric base.

Further characteristics and advantages will become better apparent from the description of preferred not exclusive embodiments of the invention, illustrated by way of nonlimiting example in the accompanying drawings, wherein:

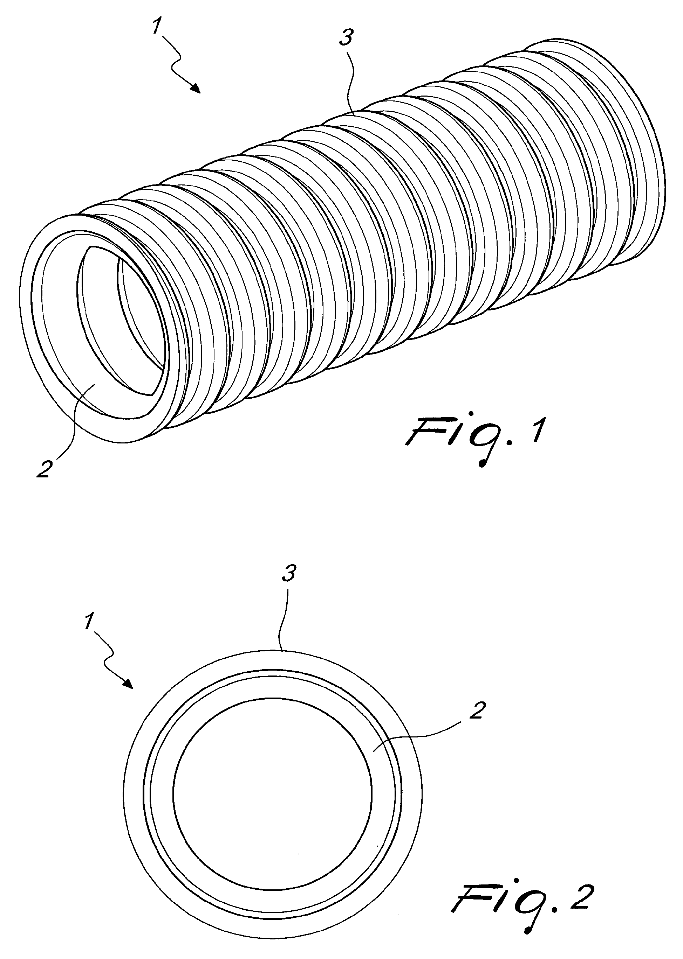

Figure 1 is a perspective view of a piece of flexible corrugated tube according to the present invention;
Figure 2 is a front view of a piece of tube;

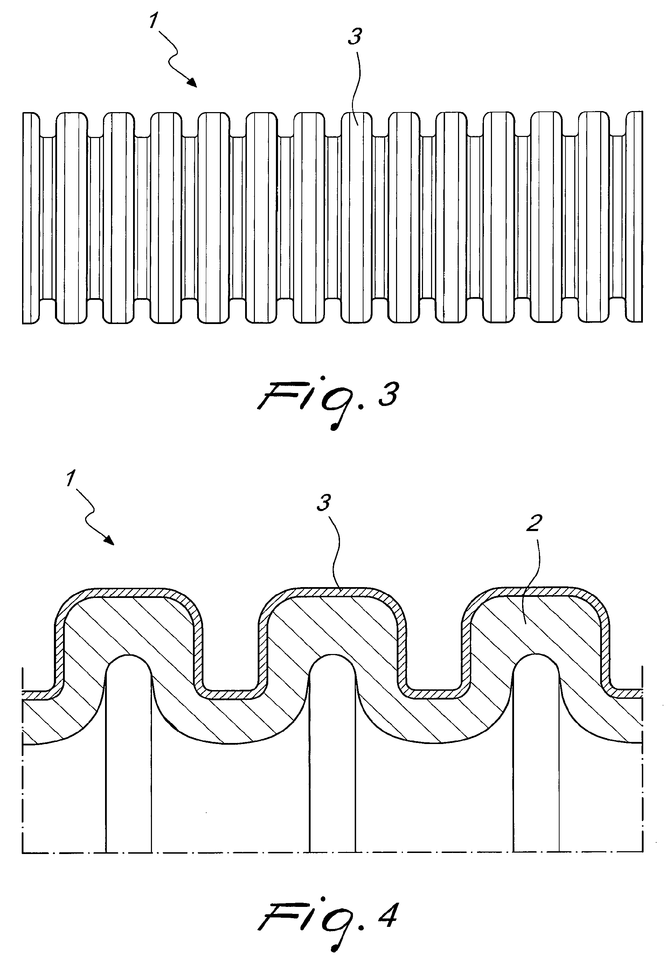

Figure 3 is a side view of a piece of tube;
Figure 4 is a longitudinal sectional view of a portion of the wall of the tube according to the present invention.

With reference to the cited figures, the flexible tube according to the invention, designated generally by the reference numeral 1, comprises a core 2 and a sheath 3, which are constituted by materials that have the same polymeric base.

The core 2 is preferably corrugated and made of material suitable to ensure all the characteristics that are required by the standards.

The outer sheath 3 has the purpose of sealing the tube so that the liquid cement does not penetrate inside it.

Advantageously, the internal surface of the core 2 is lubricated in order to facilitate the sliding of the electrical wires.

According to a preferred embodiment, the core is made of PVC (polyvinyl chloride), while the sheath is made of PVC-PL (plasticized polyvinyl chloride).

Since the polymeric base is the same, the two materials thermally couple with each other, having extrusion temperatures that are different but do not exceed 20°C, and without causing any overheating between the two materials.

The extrusion temperature of PVC is 180°C, while the extrusion temperature of PVC-PL is 160°C.

Upon extrusion, the sheath 3 is deposited on the core 2, melting the outer surface thereof and becoming monolithic, sealing possible micro-perforations.

Another advantage is appreciated when the tube is subjected to thermal expansion: the sheath and the core in fact do not separate, because the expansion coefficients of the two materials that constitute them are similar.

Advantageously, the two components, the core and the sheath, are coloured differently, in order to allow a possible accurate visual inspection of the integrity of the outer protective sheath.

The core 2 is preferably light gray, whereas the outer sheath 3 has different colors in order to distinguish different functional uses.

In practice it has been found that the invention achieves the intended aim and objects, by providing a composite flexible tube made of materials that have a similar polymeric base, so as to improve the extrusion process and improve the resistance to thermal and mechanical stresses.

## Claims

**1.** A flexible tube, particularly for cable protection, comprising an inner core covered by an outer sheath; said tube being **characterized in that** said core and said sheath are made of materials having the same polymeric base.

**3.** The tube according to claim 1, **characterized in that** the difference in the extrusion temperature of each of said materials is less than or equal to 20°C.

**4.** The tube according to claim 1, **characterized in that** said sheath is at least partially melted into the outer surface portion of said core.

**5.** The tube according to claim 1, **characterized in that** said core is corrugated.

**6.** The tube according to claim 1, **characterized in that** said core has a lubricated inner surface.

**7.** The tube according to claim 1, **characterized in that** said core is made of PVC (polyvinyl chloride), said sheath is made of PVC-PL (plasticized polyvinyl chloride).

**8.** The tube according to claim 1, **characterized in that** said core and said sheath have a different colour.
